# EUROPÄISCHE PATENTSCHRIFT

(11) **EP 2 929 367 B1**
(45) Veröffentlichungstag und Bekanntmachung des Hinweises auf die Patenterteilung: **04.09.2019**
(21) Anmeldenummer: 12816022.3
(22) Anmeldetag: 10.12.2012
(51) Int. Cl.: G01S 15/50, G01S 15/08, G10K 9/12, G01S 7/539, G01S 15/52, G06F 3/038

(54) **SENSOREINRICHTUNG FÜR EIN COMPUTERSYSTEM, COMPUTERSYSTEM MIT EINER SENSOREINRICHTUNG SOWIE BETRIEBSVERFAHREN FÜR EINE SENSOREINRICHTUNG**
SENSOR DEVICE FOR A COMPUTER SYSTEM, COMPUTER SYSTEM COMPRISING A SENSOR DEVICE AND OPERATING METHOD FOR A SENSOR DEVICE
DISPOSITIF CAPTEUR POUR UN SYSTEME INFORMATIQUE, SYSTEME INFORMATIQUE COMPORTANT UN DISPOSITIF CAPTEUR ET PROCEDE DE FONCTIONNEMENT D'UN DISPOSITIF CAPTEUR

(43) Veröffentlichungstag der Anmeldung: 14.10.2015
(73) Patentinhaber: Fujitsu Client Computing Limited, Kawasaki-shi, Kanagawa-ken 211-8588 (JP)
(72) Erfinder: HÄUSSERMANN, Rudolf, 86150 Augsburg (DE); BRUDEREK, Timo, 86179 Augsburg (DE)
(74) Vertreter: Epping - Hermann - Fischer
(86) Internationale Anmeldenummer: PCT/EP2012/074968
(87) Internationale Veröffentlichungsnummer: WO 2014/090279

(56) Entgegenhaltungen:
- US-A1- 2011 069 738
- US-B1- 7 724 355

## Beschreibung

Die Erfindung betrifft eine Sensoreinrichtung für ein Computersystem, welche eine Sende- und Empfangseinheit und eine mit der Sende- und Empfangseinheit verbundene Datenverarbeitungsvorrichtung aufweist. Die Erfindung betrifft des Weiteren ein Computersystem mit einer Sensoreinrichtung sowie ein Betriebsverfahren für eine Sensoreinrichtung.

Sensoreinrichtungen zum Erkennen von Objekten oder Personen sind aus dem Stand der Technik bekannt. Solche Sensoreinrichtungen werden in verschiedenen technischen Branchen verwendet. Häufig werden hierzu Ultraschallsensoren eingesetzt. In der Automobilbranche werden beispielsweise Ultraschallsensoren verwendet, um dem Fahrzeughalter beim Einparkvorgang zu assistieren. Beispielsweise beim Rückwärtsfahren detektieren die Sensoren Hindernisse in der Umgebung des Fahrzeugs und verhindern somit eine Kollision mit diesem. In der Medizin werden Ultraschallgeräte verwendet, mittels derer sich Organe beziehungsweise deren Konturen im menschlichen Körper erkennen lassen.

Ultraschallsensoren senden zum Detektieren von Objekten Ultraschallsignale beziehungsweise -wellen in die Umgebung aus, die von Objekten reflektiert werden. Die reflektierten Ultraschallsignale können von den Ultraschallsensoren empfangen werden. Mittels der Signallaufzeiten lassen sich schließlich die Entfernungen zu den Objekten berechnen.

Aus der US 7,724,355 B1 sind ein Gerät und ein Verfahren zum Erhöhen einer Abstandsmessungsgenauigkeit in Ultraschallgeräten zur berührungslosen Abtastung bekannt. Das Verfahren umfasst das Aussenden eines Ultraschallsignals, das von einem Finger reflektiert wird und ein Echo produziert. Das Echo wird empfangen und die neuesten Echos werden in einer Historie gespeichert. Ältere Echos werden selektiv aus der Historie gelöscht, um eine verkleinerte Historie zu erzeugen. Eine relative Phase des Echos wird anhand von vorher gespeicherten Echos der verkleinerten Historie identifiziert. Eine Position und eine Bewegung des Fingers werden basierend auf einer Ankunftszeit des Echos und der relativen Phase errechnet. Somit wird eine berührungslose Kontrolle in einem Benutzerinterface in Abhängigkeit der Position und der Bewegung des Fingers bereitgestellt. Ein weiteres Beispiel ist aus US 2011/069738 A1 vorbekannt.

Eine Aufgabe, die der Erfindung zugrunde liegt, ist es, eine Sensoreinrichtung, ein Computersystem und ein Betriebsverfahren für eine Sensoreinrichtung zu beschreiben, die ein sicheres und präzises Unterscheiden zwischen veränderten und unveränderten Objekten ermöglichen.

Gemäß einem ersten Aspekt der Erfindung wird eine Sensoreinrichtung für ein Computersystem beschrieben, welche eine Sende- und Empfangseinheit sowie eine mit der Sende- und Empfangseinheit verbundene Datenverarbeitungsvorrichtung aufweist. Die Datenverarbeitungsvorrichtung ist dazu eingerichtet, der Sende- und Empfangseinheit das Aussenden von Signalen in Messintervallen vorzugeben. Weiter ist die Datenverarbeitungsvorrichtung dazu eingerichtet, anhand empfangener, reflektierter Signale Signalbereiche zu erkennen, die Objekten zuordenbar sind. Weiter ist die Datenverarbeitungsvorrichtung dazu eingerichtet, für zusammengehörige, erkannte Signalbereiche eine Abweichung, nämlich eine Varianz, der Intensitäten der erkannten Signalbereiche über mehrere Messintervalle zu bestimmen. Des Weiteren ist die Datenverarbeitungsvorrichtung dazu eingerichtet, anhand der bestimmten Abweichung zu entscheiden, ob eine Veränderung des Objekts, das dem jeweils erkannten Signalbereich zugeordnet ist, stattgefunden hat. Die Datenverarbeitungsvorrichtung ist weiter dazu eingerichtet, mittels eines Integrationsverfahrens die bestimmte Abweichung auszuwerten, sodass eine Größe beziehungsweise Reflexionsfläche eines Objekts ermittelt werden kann.

Die Sensoreinrichtung gemäß dem ersten Aspekt der Erfindung sieht vor, Signale, beispielsweise Ultraschallsignale, mittels der Sende- und Empfangseinheit auszusenden. Ein zu einem Messintervall ausgesendetes Signal kann dabei an verschiedenen Objekten, die sich in der Umgebung befinden, reflektiert werden. Die reflektierten Signale können von der Sende- und Empfangseinheit wieder empfangen werden. Die Datenverarbeitungsvorrichtung erkennt nun Signalbereiche, die Objekten zuordenbar sind. Anschließend bestimmt die Datenverarbeitungsvorrichtung für zusammengehörige, erkannte Signalbereiche eine Abweichung, beispielsweise eine Varianz, der Intensitäten der erkannten Signalbereiche über mehrere Messintervalle. Anschließend entscheidet die Datenverarbeitungsvorrichtung anhand der bestimmten Abweichung, beispielsweise mittels eines Grenzbeziehungsweise Schwellwerts, ob sich das Objekt, welches dem jeweils erkannten Signalbereich zugeordnet ist, verändert hat. Eine Veränderung kann beispielsweise eine Bewegung des Objekts sein. Eine niedrige Abweichung weist dabei auf ein unverändertes beziehungsweise statisches Objekt hin, eine hohe Abweichung auf ein verändertes, beispielsweise bewegtes, Objekt. Somit ist es auf einfache Weise möglich, präzise zwischen einem veränderten und einem unveränderten Objekt unterscheiden zu können.

Durch Ermittlung der Größe beziehungsweise Reflexionsfläche eines Objekts können beispielsweise Rückschlüsse gezogen werden, ob es sich bei dem detektierten Objekt beispielsweise um ein zu überwachendes Objekt, wie beispielsweise einen Menschen, oder eine Störobjekt, wie beispielsweise eine Fliege, handelt.

Gemäß einer weiteren vorteilhaften Ausgestaltung ist die Datenverarbeitungsvorrichtung weiter dazu eingerichtet, eine Bewegungsrichtung eines bewegten Objekts zu ermitteln, wobei Entfernungsänderungen des Objekts anhand der erkannten Signalbereiche über mehrere Messintervalle berechnet werden. Dadurch ist es beispielsweise möglich, zu erkennen, ob sich ein Objekt auf den Sensor zu bewegt, von diesem entfernt oder den Sensor passiert.

Gemäß einer weiteren vorteilhaften Ausgestaltung weist die Datenverarbeitungsvorrichtung einen Mikrocontroller auf. Im Vergleich zu diskreten Schaltungen oder leistungsfähigen Mikroprozessoren zeichnen sich Mikrocontroller durch geringere Kosten und eine sehr geringe Leistungsaufnahme aus.

Gemäß einem zweiten Aspekt der Erfindung wird ein Computersystem beschrieben, insbesondere ein Desktop- oder Towersystem, welches eine Sensoreinrichtung gemäß dem ersten Aspekt der Erfindung aufweist. Das Computersystem weist weiter eine Bildschirmeinheit auf, an welcher die Sensoreinrichtung festgelegt oder in welche die Sensoreinrichtung integriert ist. Das Computersystem ist dazu eingerichtet, anhand der von der Sensoreinrichtung berechneten und/oder ausgewerteten Daten die Bildschirmeinheit und/oder das Computersystem in einen vorbestimmten Betriebszustand, insbesondere einen Energiesparmodus, zu versetzen.

Das Computersystem gemäß dem zweiten Aspekt der Erfindung weist im Wesentlichen die vorgenannten Vorteile auf. Ein solches Computersystem ist beispielsweise in der Lage, zu erkennen, ob sich ein Benutzer auf einen Computer zu bewegt oder von diesem entfernt. Anhand dieser Information kann es sich selbst beziehungsweise die Bildschirmeinheit bei Abwesenheit eines Benutzers beispielsweise in einen Energiesparmodus beziehungsweise bei Anwesenheit des Benutzers aus einem Energiesparmodus in einen normalen Betriebsmodus versetzen. Damit können der Energieverbrauch und/oder die Energiekosten des Computersystems gesenkt werden. Es ist beispielsweise auch denkbar, dass das Computersystem bei Abwesenheit eines Benutzers eine Zugangssperre und/oder einen oder mehrere weitere Betriebszustände aktiviert.

Gemäß einem dritten Aspekt der Erfindung wird ein Betriebsverfahren für eine Sensoreinrichtung beschrieben, insbesondere für eine Sensoreinrichtung gemäß dem ersten Aspekt der Erfindung, welches die folgenden Schritte umfasst:
- Aussenden von Signalen in einer Mehrzahl von Messintervallen,
- Empfangen von reflektierten Signalen innerhalb der Mehrzahl von Messintervallen,
- Erkennen von Signalbereichen anhand der empfangenen, reflektierten Signale, die Objekten zuordenbar sind,
- Bestimmen einer Abweichung, nämlich einer Varianz, der Intensitäten zusammengehöriger Signalbereiche über die Mehrzahl von Messintervallen, und
- Entscheiden anhand der bestimmten Abweichung, ob eine Veränderung des Objekts, das dem jeweils erkannten Signalbereich zugeordnet ist, stattgefunden hat.

Das Betriebsverfahren weist folgenden weiteren Schritt auf:
- Ermitteln der Größe beziehungsweise Reflexionsfläche eines einem erkannten Signalbereich zugeordneten Objekts, wobei mittels eines Integrationsverfahrens die bestimmte Abweichung ausgewertet wird.

Gemäß einer weiteren vorteilhaften Ausgestaltung weist das Betriebsverfahren folgenden weiteren Schritt auf:
- Ermitteln von Bewegungsrichtungen bewegter Objekte, wobei Entfernungsänderungen der Objekte anhand der erkannten Signalbereiche über die Mehrzahl von Messintervallen berechnet werden.

Das Betriebsverfahren gemäß dem dritten Aspekt der Erfindung weist im Wesentlichen die vorgenannten Vorteile auf.

Weitere vorteilhafte Ausgestaltungen sind in der nachfolgenden ausführlichen Beschreibung von Ausführungsbeispielen sowie den abhängigen Patentansprüchen offenbart.

Ausführungsbeispiele der Erfindung sind nachfolgend unter Bezugnahme auf die angehängten Figuren beschrieben. In den Figuren sind gleichartige Komponenten unterschiedlicher Ausführungsbeispiele mit gleichen Bezugszeichen versehen.

In den Figuren zeigen:
- Figur 1: eine schematische Darstellung einer Sensoreinrichtung,
- Figur 2: eine schematische Darstellung von Signalen in einem Diagramm,
- Figur 3: eine schematische Darstellung von Varianzen in einem Diagramm,
- Figur 4: eine weitere, schematische Darstellung von Varianzen in einem Diagramm,
- Figur 5: eine schematische Darstellung einer Objekterkennung in einem Diagramm,
- Figur 6: schematische Darstellungen von Objekterkennungen in Diagrammen,
- Figur 7: eine schematische Darstellung eines Computersystems mit der Sensoreinrichtung und
- Figur 8: ein Ablaufdiagramm eines Betriebsverfahrens der Sensoreinrichtung.

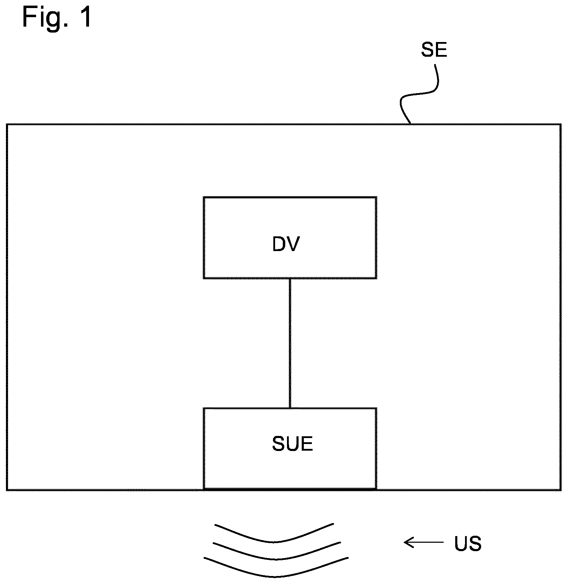

Figur 1 zeigt eine schematische Darstellung einer Sensoreinrichtung SE. Die Sensoreinrichtung SE, welche beispielsweise einen Ultraschallsensor umfasst, weist eine Sende- und Empfangseinheit SUE sowie eine Datenverarbeitungsvorrichtung DV auf. Die Datenverarbeitungsvorrichtung DV kann beispielsweise als Mikrocontroller ausgestaltet sein. Die Sende- und Empfangseinheit SUE kann beispielsweise als Piezowandler zum Erzeugen und Empfangen von Ultraschallsignalen ausgestaltet sein und ist mit der Datenverarbeitungsvorrichtung DV verbunden. Die Sende- und Empfangseinheit SUE, welche in Figur 1 als Einheit ausgestaltet ist, kann alternativ auch aus physisch getrennten Einheiten für das Empfangen beziehungsweise Senden von Signalen bestehen und eine logische Einheit bilden. Die Datenverarbeitungsvorrichtung DV gibt der Sende- und Empfangseinheit SUE zyklisch, also für wiederkehrende Messintervalle, vor, ein Ultraschallsignal US auszusenden. Das Aussenden von Signalen kann beispielsweise durch einen Impuls, beispielsweise einen Dirac-Impuls, erfolgen. Zusätzlich kann die Sensoreinrichtung SE einen Speicher aufweisen (nicht dargestellt), der dazu eingerichtet ist, empfangene Signale beziehungsweise verarbeitete Daten der Datenverarbeitungsvorrichtung DV zu speichern und zu verwalten.

Die Sende- und Empfangseinheit SUE sendet zu Beginn eines Messintervalls das Ultraschallsignal US aus, welches sich in Form von Ultraschallwellen in der räumlichen Umgebung der Sensoreinrichtung SE ausbreitet. Ein Messintervall der Sensoreinrichtung SE ist beispielsweise 200 ms lang. Das Ultraschallsignal US kann zumindest teilweise an verschiedenen, sich im Raum befindlichen Objekten reflektiert werden und als Echo beziehungsweise reflektiertes Signal zurück zu der Sende- und Empfangseinheit SUE gelangen. Die reflektierten Signale werden von der Sende- und Empfangseinheit SUE empfangen, umgewandelt und als elektrische Signale an die Datenverarbeitungsvorrichtung DV zur Verarbeitung der Signaldaten weitergeleitet.

Die empfangenen Signale gelangen zu verschiedenen Zeitpunkten nach Aussenden des Ultraschallsignals US innerhalb des Messintervalls an die Sende- und Empfangseinheit SUE zurück und weisen unterschiedliche Signalintensitäten auf. Die Signalintensitäten variieren je nachdem, in welcher Entfernung sich das Objekt befindet und/oder wie, beispielsweise in welchem Winkel, das Signal von diesem Objekt reflektiert wurde. Mittels der beispielsweise in Luft bekannten Schallgeschwindigkeit und der jeweiligen Zeitintervalle, die vom Aussenden des Ultraschallsignals US bis zum Empfang der reflektierten Signale durch die Sende- und Empfangseinheit SUE vergangen sind, lassen sich somit Distanzen zu den Objekten in der Umgebung für ein Messintervall berechnen. Eine Mehrzahl zeitlich versetzt empfangener Signale und deren Intensitäten lassen sich somit unterschiedlich entfernten Objekten zuordnen und können für jedes Messintervall festhalten werden.

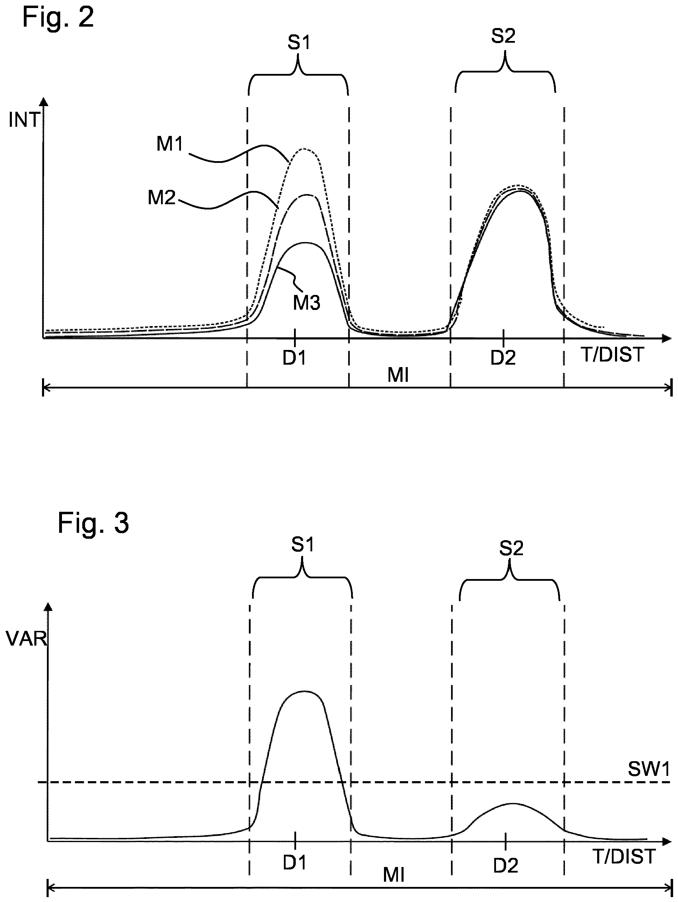

In den nachfolgend beschriebenen Figuren 2 bis 6 werden schematisch Messungen und deren Auswertungen beziehungsweise Berechnungen der Sensoreinrichtung SE gemäß der Ausgestaltung der Figur 1 anhand von Diagrammen erläutert.

Figur 2 zeigt schematisch ein Diagramm, welches den Zeitverlauf eines Messintervalls MI darstellt. In diesem Diagramm sind drei Messungen M1, M2 und M3 dreier aufeinanderfolgende Messintervalle MI dargestellt. Die Rechtsachse des Diagramms beschreibt hierbei die Zeit T und die Hochachse die Intensitäten INT empfangener, von Objekten reflektierter Signale. Die gemessenen Zeiten T sind dabei proportional zu Entfernungen der Objekte, sodass jeder Zeit T eines reflektierten Signals eine entsprechende Distanz DIST beziehungsweise Entfernung zu einem Objekt zugeordnet werden kann. Jeder Messung M1 bis M3 beziehungsweise jedem Messintervall MI geht ein ausgesendetes Signal, beispielsweise ein Ultraschallsignal US, der Sende- und Empfangseinheit SUE voraus, welches an verschiedenen Objekten reflektiert wurde.

Gemäß Figur 2 hat die Sende- und Empfangseinheit SUE für jede Messung M1 bis M3 Signale empfangen, aus denen sich zwei Signalblöcke beziehungsweise Signalbereiche S1 und S2 mittels der Datenverarbeitungsvorrichtung DV erkennen beziehungsweise identifizieren lassen, die zwei Objekten zugeordnet werden können. Die Erkennung kann beispielsweise durch einen Vergleich mit einem Grenzwert geschehen. Der Grenzwert kann dabei eine Intensität INT oder eine Steigung des Signalverlaufs, beispielsweise eine Ableitung, sein. Weisen die empfangenen Signale über die Zeit T also einen Bereich zusammenhängender Signale mit Intensitäten INT oberhalb dieses Grenzwerts auf, dann kann diesem Signalbereich ein Objekt zugeordnet werden. Daraus lässt sich schließen, dass sich ungefähr in einer Distanz D1 beziehungsweise D2 Objekte beziehungsweise Hindernisse befinden, die von der Sensoreinrichtung SE detektiert wurden. Die Distanzen D1 und D2 werden im Wesentlichen entsprechend der höchsten Intensität INT des jeweiligen Signalbereichs S1 beziehungsweise S2 ermittelt. Die Distanzen D1 und D2 können jeweils auch einem Distanzbereich entsprechen. Über die drei Messungen M1 bis M3 hinweg zeigt sich, dass der Signalbereich S2 jeweils im Wesentlichen ähnliche Intensitäten INT beziehungsweise Intensitätsverläufe aufweist. Im Gegensatz dazu weist der Signalbereich S1 für jede Messung M1 bis M3 signifikant unterschiedliche Intensitäten INT auf.

Die Intensitäten INT der erkannten Signalbereiche S1 und S2 werden von der Datenverarbeitungsvorrichtung DV verarbeitet. Die Datenverarbeitungsvorrichtung DV berechnet aus den Intensitäten INT der Messungen M1 bis M3 jeweils eine Abweichung für jeden Signalbereich S1 und S2. In den Ausführungsbeispielen wird hierbei eine Varianz VAR berechnet. Die Varianz VAR, welche die durchschnittlich quadrierte Abweichung von einem Mittelwert beschreibt, ist im Diagramm der Figur 3 über der Distanz DIST beziehungsweise Zeit T aufgetragen. Im gezeigten Diagramm ist zu erkennen, dass der Signalbereich S1 im Vergleich zu dem Signalbereich S2 eine deutlich höhere Varianz VAR aufweist. Dieser Unterschied lässt einen Rückschluss darauf zu, ob den Signalbereichen S1 und S2 ein verändertes, beispielsweise bewegtes, Objekt oder ein unverändertes, beispielsweise statisches oder unbewegtes, Objekt zugeordnet werden kann.

Hierbei weist eine hohe Varianz VAR auf ein bewegtes Objekt hin, da das ausgesendete Ultraschallsignal US zu jeder Messung M1 bis M3 beispielsweise unterschiedlich von diesem Objekt reflektiert wird. Daraus ergibt sich, dass die Sende- und Empfangseinheit SUE unterschiedliche Intensitäten INT der empfangenen Signale empfängt. Beispielsweise verändern bereits kleinste Bewegungen, wie das Atmen eines Menschen, wesentlich die Intensitäten INT empfangener Signale beziehungsweise Signalbereiche. Dagegen werden Signale bei einem statischen beziehungsweise unbewegten Objekt für jedes Messintervall MI im Wesentlichen ähnlich reflektiert, sodass sich eine geringe Varianz VAR für dieses Objekt ergibt. Dies liegt daran, dass die ausgesendeten Ultraschallsignale US im Wesentlichen immer gleich, beispielsweise unter gleichem Winkel, reflektiert werden.

Anstelle der Varianz VAR könnte beispielsweise auch eine Standardabweichung berechnet werden oder Differenzen der Abweichungen von einem Mittelwert aufsummiert werden. Nachteilig bei Verwendung der Standardabweichung erweist sich der höhere Rechenaufwand im Vergleich zu der Varianz VAR, insbesondere aufgrund von Wurzeloperationen. Als Nachteil bei der Summation der Differenzen ergibt sich, das Vorzeichen berücksichtigt werden und sich gegebenenfalls positive und negative Abweichungen auslöschen können. Bei Verwendung der Varianz VAR werden vorteilhaft Vorzeichen durch das Quadrieren der Abweichungen nicht berücksichtigt. Zusätzlich wird durch das Quadrieren bereits kleinen Abweichungen eine starke Gewichtung zuerkannt.

Die Datenverarbeitungsvorrichtung DV kann nun beispielsweise mit Hilfe eines Schwellwertes SW1 entscheiden beziehungsweise auswerten, ob der Signalbereich S1 einem bewegten oder unbewegten Objekt entspricht. Weist ein Signalbereich im Wesentlichen eine höhere Varianz VAR als der Schwellwert SW1 auf, so kann diesem Signalbereich ein bewegtes Objekt zugeordnet werden. Signalbereiche mit einer niedrigeren Varianz VAR als dem Schwellwert SW1, also im Wesentlichen unbewegte Objekte, können somit herausgefiltert werden. Umgekehrt können auch bewegte Objekte herausgefiltert werden, wenn beispielsweise statische Objekte erkannt werden sollen.

Die Sensoreinrichtung SE kann somit auf einfache Art und Weise präzise bestimmen, ob sich in der Umgebung ein bewegtes oder ein unbewegtes Objekt befindet. Hierzu wird die Varianz VAR von erkannten Signalbereichen über verschiedene Messintervalle MI berechnet. Im dargestellten Ausführungsbeispiel sind hierzu drei Messungen M1 bis M3 für die Auswertung vorgesehen. Es ist allerdings auch denkbar, dass mehr als drei Messungen für die Bestimmung der Varianz VAR verwendet werden, um beispielsweise eine Aussagekraft der Unterscheidung zwischen bewegten und unbewegten Objekten zu erhöhen.

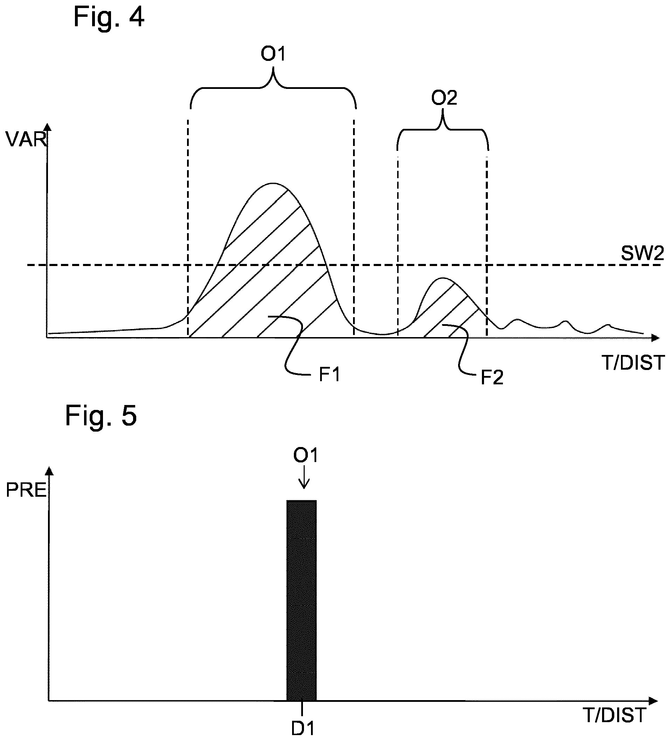

Figur 4 zeigt ein weiteres, schematisches Diagramm, welches einen Verlauf von Varianzen VAR darstellt, der anhand der Figuren 2 und 3 dargestellten Vorgehensweise bestimmt wurde. Anhand dieses Varianzverlaufs lassen sich zwei bewegte Objekte O1 und O2 identifizieren, wobei deren Varianzen VAR beispielsweise den anhand Figur 3 beschriebenen Schwellenwert SW1 überschritten haben.

Die Datenverarbeitungsvorrichtung DV der Sensoreinrichtung SE ist nun dazu eingerichtet, eine Reflexionsfläche beziehungsweise eine Objektgröße der beiden Objekte O1 und O2 zu unterscheiden. Hierzu wertet die Datenverarbeitungsvorrichtung DV mittels eines an sich bekannten Integrationsverfahrens die ermittelten Varianzen VAR aus, die den jeweiligen Objekten O1 und O2 zugrunde liegen. Im gezeigten Ausführungsbeispiel werden somit Integrale der den Objekten O1 und O2 zugehörigen Varianzen VAR berechnet. Dies entspricht Flächen F1 und F2 der Varianzkurve gemäß dem Diagramm der Figur 4. Anhand dieser Flächen F1 und F2 lassen sich Rückschlüsse auf die Reflexionsgröße der Objekte O1 und O2 ziehen. Insbesondere kann auf eine sich ändernde, beispielsweise bewegte, Fläche eines Objekts geschlossen werden. Beispielsweise bewegt sich beim Atmen eines Menschen nahezu der gesamte Oberkörper, wodurch sich eine große Fläche des Menschen ändert. Bewegt sich dagegen beispielsweise bei einem großen Objekt wie einer Standuhr ein Zeiger, ändert sich lediglich eine kleine Fläche des Objekts. Somit kann zwischen zwei großen Objekten unterschieden werden. Beispielsweise werden diese Flächen F1 und F2 wiederum mit einem Schwellwert SW2 beziehungsweise Grenzwert verglichen. Auf diese Weise lassen sich Größen der sich ändernden bzw. bewegten Flächen von Objekten unterscheiden und Rückschlüsse auf die Größe des Objekts ziehen. Beispielsweise können Menschen von kleinen Objekten, wie beispielsweise einer Fliege oder durch einen Wasserkocher entstandenen Wasserdampf, unterschieden werden.

Hat die Datenverarbeitungsvorrichtung DV ein großes Objekt wie beispielsweise einen Menschen identifiziert, so gibt sie für das identifizierte Objekt, im gezeigten Ausführungsbeispiel das Objekt O1, eine Distanz D1 an, die die Entfernung zwischen der Sensoreinrichtung SE und dem Objekt O1 beschreibt. Die Identifizierung beziehungsweise Erkennung des Objekts O1 kann beispielsweise in einem Präsenzdiagramm angegeben sein, wobei die Präsenz PRE, beispielsweise als logische 1, über der Distanz DIST aufgetragen ist. Dies ist in der Figur 5 gezeigt. Somit kann auf einfache Art und Weise beispielsweise die Anwesenheit einer Person ermittelt werden.

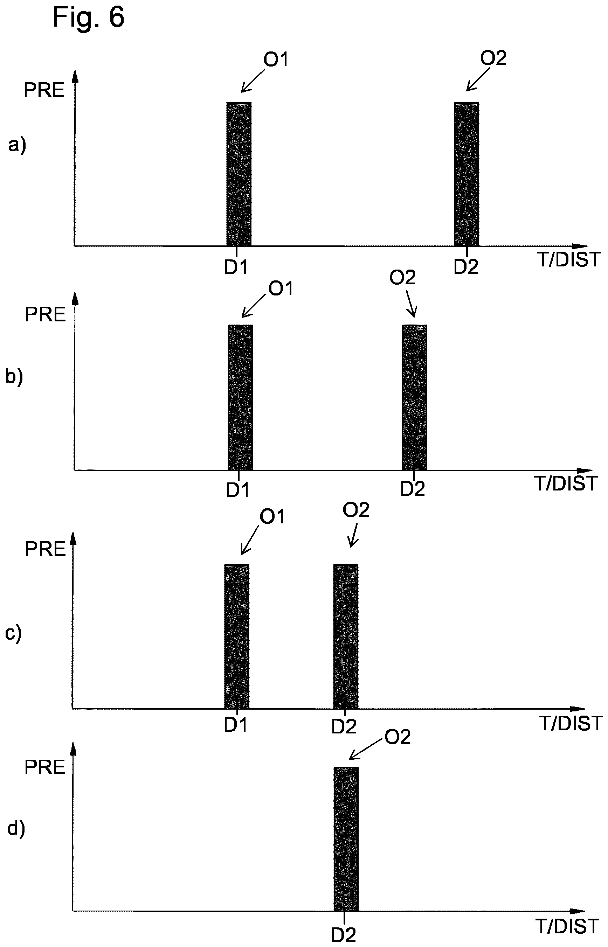

Figur 6 zeigt vier Präsenzdiagramme a), b), c) und d) der eben beschriebenen Art. Die Sensoreinrichtung SE beziehungsweise die Datenverarbeitungsvorrichtung DV hat im ersten Diagramm zwei Objekte O1 und O2 als bewegte und ausreichend große Objekte identifiziert. Um nun zu entscheiden, ob sich ein Objekt O1 beziehungsweise O2 auf die Sensoreinrichtung SE zu bewegt oder von dieser entfernt, werden nun weitere Messintervalle MI entsprechend der anhand der Figuren 2 bis 5 beschriebenen Vorgehensweisen von der Datenverarbeitungsvorrichtung DV ausgewertet. Hierbei wird von der Datenverarbeitungsvorrichtung DV ermittelt, wie sich die Distanzen DIST beziehungsweise Entfernungen der Objekte O1 und O2 zu der Sensoreinrichtung SE im Verlauf mehrerer Messintervalle MI ändern.

Die Diagramme b) und c) der Figur 6 zeigen, dass das Objekt O1 im Wesentlichen seine Entfernung entsprechend dem Distanzbereich D1 zur Sensoreinrichtung SE nicht verändert. Das Objekt O1 könnte sich demnach beispielsweise in im Wesentlich gleichbleibender Entfernung zu der Sensoreinrichtung SE an dieser vorbei bewegen. Das Objekt O2 dagegen ändert seine Entfernung im Verlauf der Zeit und bewegt sich auf die Sensoreinrichtung SE zu. Die Datenverarbeitungsvorrichtung DV ist dazu eingerichtet, die Entfernungsänderungen über die Zeit zu ermitteln und daraus Entfernungsänderungen zu errechnen. Ist eine Entfernungsänderung höher als ein vorbestimmter Schwellwert, so kann beispielsweise erkannt werden, ob sich ein Objekt auf die Sensoreinrichtung SE zu bewegt.

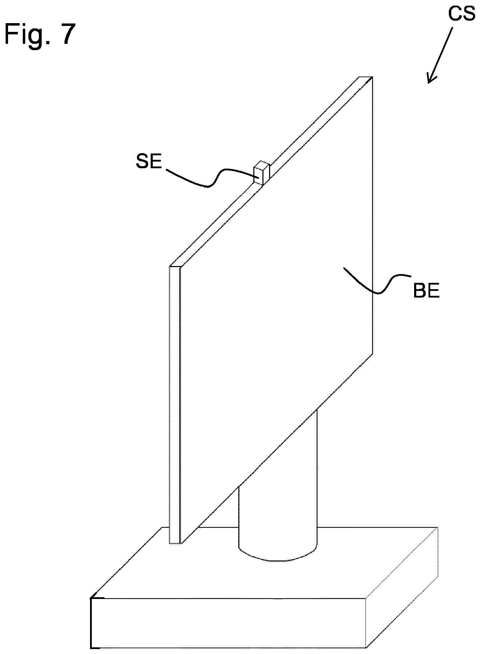

Figur 7 zeigt eine schematische Darstellung eines Computersystems CS. Das Computersystem CS weist eine Bildschirmeinheit BE auf. An der Bildschirmeinheit BE ist eine Sensoreinrichtung SE gemäß der Ausgestaltung der Figur 1 festgelegt, beispielsweise verschraubt, geklebt oder geklemmt. Die Sensoreinrichtung SE kann allerdings auch in die Bildschirmeinheit BE integriert sein. Das Computersystem CS ist dazu eingerichtet, mittels der von der Sensoreinrichtung SE ausgewerteten Daten die Bildschirmeinheit BE und/oder das Computersystem CS selbst in einen vorbestimmten Betriebszustand zu versetzen.

Erkennt die Sensoreinrichtung SE beispielsweise, dass sich ein Benutzer des Computersystems CS von dem Computersystem CS entfernt, so kann das Computersystem CS die Bildschirmeinheit BE oder das Computersystem CS selbst in einen Energiesparmodus versetzen. Umgekehrt ist es möglich, dass die Sensoreinrichtung SE während des Energiesparmodus des Computersystems CS beziehungsweise der Bildschirmeinheit BE einen Benutzer erkennt, der sich auf das Computersystem CS zu bewegt und das Computersystem CS bedienen möchte. Dies wird von der Sensoreinrichtung SE erkannt und das Computersystem CS kann die Bildschirmeinheit BE beziehungsweise das Computersystem CS selbst aus dem Energiesparmodus in einen Betriebsmodus versetzen. Bewegt sich ein Benutzer am Sensor vorbei, so ändert das Computersystem CS seinen Modus nicht.

Befindet sich ein Benutzer, der sich auf das Computersystem CS bewegt hat und von der Sensoreinrichtung SE detektiert wurde, vor dem im normalen Betriebsmodus befindlichen Computersystem CS, so wird verhindert, dass das Computersystem CS selbst und/oder die Bildschirmeinheit BE beispielsweise in einen Energiesparmodus versetzt wird. Dabei erkennt die Sensoreinrichtung SE Bewegungen, beispielsweise das Atmen, des Benutzers. Würde die Sensoreinrichtung SE über mehrere Sekunden, beispielsweise 5 bis 7 Sekunden, keine Bewegung des vor der Bildschirmeinheit BE befindlichen Benutzers erkennen, so kann das Computersystem CS selbst und/oder die Bildschirmeinheit BE in einen vorbestimmten Betriebszustand, wie beispielsweise einen Energiesparmodus, versetzt werden.

Alternativ oder zusätzlich kann das Computersystem auch einen anderen Betriebszustand, wie beispielsweise eine Zugangssperre, bei Entfernen des Benutzers aktivieren.

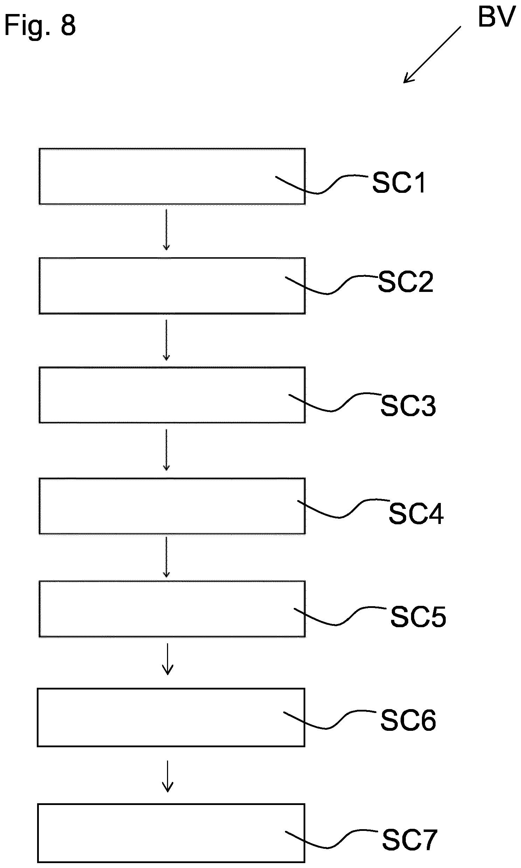

Figur 8 zeigt ein Ablaufdiagramm für ein Betriebsverfahren BV der eben beschriebenen Sensoreinrichtung SE.

In einem ersten Schritt SC1 werden Signale, beispielsweise Ultraschallsignale US, in einer Mehrzahl von Messintervallen MI ausgesendet. Das Aussenden eines Signals ist beispielsweise durch die Datenverarbeitungsvorrichtung DV vorgegeben und geschieht vornehmlich zu Beginn eines jeden Messintervalls MI.

In einem Schritt SC2 werden innerhalb der Mehrzahl von Messintervallen MI reflektierte Signale von der Sende- und Empfangseinheit SUE empfangen. Diese Signale werden umgewandelt und als elektrische Signale an die Datenverarbeitungsvorrichtung DV zur Verarbeitung dieser weitergegeben.

In einem Schritt SC3 werden Signalbereiche, beispielsweise die Signalbereiche S1 und S2, anhand der in Schritt SC2 empfangenen, reflektierten Signale erkannt, die Objekten zuordenbar sind. Dies geschieht mittels der Datenverarbeitungsvorrichtung DV beispielsweise anhand eines Grenzwertes. Ein solcher Grenzwert kann beispielsweise eine Intensität INT oder eine Flankensteigung des Signals sein. Zeitlich unmittelbar aufeinanderfolgende Signale eines Messintervalls MI, welche Intensitäten INT oberhalb des Grenzwerts aufweisen, werden zu Signalbereichen zusammengefasst und einem Objekt zugeordnet.

In einem Schritt SC4 bestimmt die Datenverarbeitungsvorrichtung DV eine Abweichung, insbesondere eine Varianz VAR der Intensitäten INT zusammengehöriger Signalbereiche über die Mehrzahl von Messintervallen MI.

In einem Schritt SC5 entscheidet die Datenverarbeitungsvorrichtung DV anhand der bestimmten Abweichung, ob eine Veränderung des Objekts, das dem jeweils erkannten Signalbereich zugeordnet ist, stattgefunden hat. Dazu kann die Datenverarbeitungsvorrichtung DV die bestimmte Abweichung beispielsweise mit einem vorbestimmten Schwellwert vergleichen. Überschreiten die bestimmten Abweichungen den Schwellwert, so sind diese jeweils einem veränderten Objekt zuzuordnen. Eine Veränderung eines Objekts ist beispielsweise dessen Bewegung. Es kann somit zwischen einem unbewegten und bewegten Objekt unterschieden werden.

In einem Schritt SC6 wird die Größe beziehungsweise Reflexionsfläche eines Objekts ermittelt, welches einem erkannten Signalbereich zugeordnet wurde. Hierbei wird mittels eines Integrationsverfahrens die bestimmte Abweichung ausgewertet. Dazu kann die Datenverarbeitungsvorrichtung DV die ermittelte Größe beispielsweise ebenfalls mit einem vorbestimmten Schwellwert vergleichen.

In einem Schritt SC7 wird die Bewegungsrichtung eines bewegten Objekts ermittelt, wobei eine Entfernungsänderung des Objekts anhand des erkannten Signalbereichs S1 bzw. S2 über die Mehrzahl von Messintervallen MI berechnet wird. Dabei werden Änderungen der Distanz des Objekts zu der Sensoreinrichtung SE erkannt. Verringert sich die Distanz, so bewegt sich das Objekt auf die Sensoreinrichtung SE zu, vergrößert sich die Distanz, so bewegt sich das Objekt von der Sensoreinrichtung SE weg. Bleibt die Distanz eines Objekts im Wesentlichen gleich, so kann beispielsweise erkannt werden, dass sich ein Objekt an der Sensoreinrichtung SE in im Wesentlichen gleichbleibendem Abstand vorbei bewegt.

Soll beispielsweise nur zwischen unbewegten und bewegten Objekten unterschieden werden, so müssen die Schritte SC6 und SC7 nicht ausgeführt werden. Ebenfalls denkbar ist, entweder auf den Schritt SC6 oder den Schritt SC7 zu verzichten, wenn beispielsweise nur eine Bewegungsrichtung oder eine Größe eines Objekts erkannt werden soll.

Die Erfindung ist nicht auf die angegebenen Ausführungsbeispiele beschränkt. Insbesondere ist es möglich, die Merkmale beziehungsweise Funktionen der verschiedenen Ausführungsbeispiele miteinander zu kombinieren.

### Bezugszeichenliste

- BE: Bildschirmeinheit
- BV: Betriebsverfahren
- CS: Computersystem
- D1, D2: Distanz
- DIST: Distanz
- DV: Datenverarbeitungsvorrichtung
- F1, F2: Fläche
- INT: Intensität
- M1, M2, M3: Messung
- MI: Messintervall
- O1, O2: Objekt
- PRE: Präsenz
- S1, S2: Signalbereich
- SC1 bis SC5: Schritte
- SE: Sensoreinrichtung
- SUE: Sende- und Empfangseinheit
- SW1, SW2: Schwellwert
- T: Zeit
- US: Ultraschallsignal
- VAR: Varianz

## Patentansprüche

1. Sensoreinrichtung (SE) für ein Computersystem (CS), aufweisend eine Sende- und Empfangseinheit (SUE) und eine mit der Sende- und Empfangseinheit (SUE) verbundene Datenverarbeitungsvorrichtung (DV), wobei die Datenverarbeitungsvorrichtung (DV) dazu eingerichtet ist,
- der Sende- und Empfangseinheit (SUE) das Aussenden von Signalen (US) in Messintervallen (MI) vorzugeben,
- anhand empfangener, reflektierter Signale Signalbereiche (S1, S2) zu erkennen, die Objekten (O1, O2) zuordenbar sind;
- für zusammengehörige, erkannte Signalbereiche (S1, S2) eine Abweichung der Intensitäten (INT) der empfangenen Signalbereiche (S1, S2) über mehrere Messintervalle (MI) zu bestimmen und
- anhand der bestimmten Abweichung zu entscheiden, ob eine Veränderung des Objekts, das dem jeweils erkannten Signalbereich (S1, S2) zugeordnet ist, stattgefunden hat,
**dadurch gekennzeichnet, dass**
die Abweichung eine Varianz (VAR) ist und die Datenverarbeitungsvorrichtung (DV) weiter dazu eingerichtet ist, mittels eines Integrationsverfahrens die bestimmte Abweichung auszuwerten, um eine Größe beziehungsweise Reflexionsfläche eines Objekts (O1, O2) zu ermitteln.

2. Sensoreinrichtung (SE) nach Anspruch 1,
bei welcher die Datenverarbeitungsvorrichtung (DV) weiter dazu eingerichtet ist, eine Bewegungsrichtung eines bewegten Objekts (O1, O2) zu ermitteln, wobei Entfernungsänderungen des Objekts (O1, O2) anhand der erkannten Signalbereiche (S1, S2) über mehrere Messintervalle (MI) berechnet werden.

3. Sensoreinrichtung (SE) nach einem der Ansprüche 1 bis 2,
bei welcher die Datenverarbeitungsvorrichtung (DV) einen Mikrocontroller aufweist.

4. Sensoreinrichtung (SE) nach einem der Ansprüche 1 bis 3, welche einen Ultraschallsensor umfasst.

5. Computersystem (CS), insbesondere ein Desktop- oder Towersystem, mit einer Sensoreinrichtung (SE) nach einem der Ansprüche 1 bis 4, aufweisend
eine Bildschirmeinheit (BE), an welcher die Sensoreinrichtung (SE) festgelegt oder in welche die Sensoreinrichtung (SE) integriert ist, wobei das Computersystem (CS) dazu eingerichtet ist, anhand der von der Sensoreinrichtung (SE) berechneten und/oder ausgewerteten Daten die Bildschirmeinheit (BE) und/oder das Computersystem (CS) in einen vorbestimmten Betriebszustand, insbesondere einen Energiesparmodus, zu versetzen.

6. Betriebsverfahren (BV) für eine Sensoreinrichtung (SE), insbesondere nach einem der Ansprüche 1 bis 4, umfassend die Schritte:
- Aussenden von Signalen (US) in einer Mehrzahl von Messintervallen (MI),
- Empfangen von reflektierten Signalen innerhalb der Mehrzahl von Messintervallen (MI),
- Erkennen von Signalbereichen (S1, S2) anhand der empfangenen, reflektierten Signale, die Objekten zuordenbar sind,
- Bestimmen einer Abweichung der Intensitäten (INT) zusammengehöriger Signalbereiche (S1, S2) über die Mehrzahl von Messintervallen (MI), und
- Entscheiden anhand der bestimmten Abweichung, ob eine Veränderung des Objekts, das dem jeweils erkannten Signalbereich (S1, S2) zugeordnet ist, stattgefunden hat,
**dadurch gekennzeichnet, dass**
die Abweichung eine Varianz (VAR) ist und folgender weiterer Schritt ausgeführt wird: Ermitteln der Größe beziehungsweise Reflexionsfläche eines einem erkannten Signalbereich (S1, S2) zugeordneten Objekts (O1, O2), wobei mittels eines Integrationsverfahrens die bestimmte Abweichung ausgewertet wird.

7. Betriebsverfahren (BV) nach Anspruch 6,
bei welchem folgender weiterer Schritt ausgeführt wird:
Ermitteln von Bewegungsrichtungen bewegter Objekte (O1, O2), wobei Entfernungsänderungen der Objekte (O1, O2) anhand der erkannten Signalbereiche (S1, S2) über die Mehrzahl von Messintervallen (MI) berechnet werden.

8. Betriebsverfahren (BV) nach einem der Ansprüche 6 oder 7,
bei welchem im Schritt des Aussendens Ultraschallsignale ausgesendet werden.

## Claims

1. Sensor device (SE) for a computer system (CS), comprising a transceiver unit (SUE) and a data processing device (DV) that is connected to the transceiver unit (SUE), wherein the data processing device (DV) is configured
- to specify for the transceiver unit (SUE) the emission of signals (US) at measuring intervals (MI),
- to detect, by means of received, reflected signals, signal ranges (S1, S2) that can be associated with objects (O1, O2);
- to determine, for detected signal ranges (S1, S2) that belong together, a deviation in the intensities (INT) of the received signal ranges (S1, S2) over a number of measuring intervals (MI) and
- to decide with the aid of the deviation determined whether a change has taken place in the object that is associated with the respectively detected signal range (S1, S2),
**characterised in that**
the deviation is a variance (VAR) and the data processing device (DV) is further configured to evaluate the determined deviation by means of an integration method, in order to determine a magnitude or reflection surface of an object (O1, O2).

2. Sensor device (SE) according to claim 1, in which the data processing device (DV) is further configured to determine a movement direction of a moved object (O1, O2), wherein changes in the distance of the object (O1, O2) are calculated by means of the detected signal ranges (S1, S2) over a number of measuring intervals (MI).

3. Sensor device (SE) according to one of claims 1 to 2, in which the data processing device (DV) comprises a microcontroller.

4. Sensor device (SE) according to any one of claims 1 to 3, which comprises an ultrasonic sensor.

5. Computer system (CS), in particular a desktop or tower system, with a sensor device (SE) according to any one of claims 1 to 4, comprising
a visual display unit (BE), to which the sensor device (SE) is fixed or into which the sensor device (SE) is integrated, wherein
the computer system (CS) is configured to put the visual display unit (BE) and/or the computer system (CS) into a predetermined operating mode, in particular an energy-saving mode, by means of the data calculated and/or evaluated by the sensor device (SE).

6. Operating method (BV) for a sensor device (SE), in particular according to any one of claims 1 to 4, comprising the steps:
- emission of signals (US) in a plurality of measuring intervals (MI),
- receiving of reflected signals within the plurality of measuring intervals (MI),
- detection of signal ranges (S1, S2) by means of the received, reflected signals, which can be associated with objects,
- determination of a deviation in the intensities (INT) of signal ranges (S1, S2), which belong together, over the plurality of measuring intervals (MI), and
- deciding with the aid of the determined deviation whether a change has taken place in the object that is associated with the respectively detected signal range (S1, S2),
**characterised in that**
the deviation is a variance (VAR) and the following further step is executed:
determination of the magnitude or reflection surface of an object (01, O2) associated with a detected signal range (S1, S2), wherein the determined deviation is evaluated by means of an integration method.

7. Operating method (BV) according to claim 6,
in which the following further step is carried out: determination of movement directions of moved objects (O1, O2), wherein changes in the distance of the objects (O1, O2) are calculated by means of the detected signal ranges (S1, S2) over the plurality of measuring intervals (MI) .

8. Operating method (BV) according to one of claims 6 or 7, in which, in the step of emission, ultrasonic signals are emitted.

## Revendications

1. Dispositif capteur (SE) pour un système informatique (CS), présentant une unité émetteur-récepteur (SUE) et un dispositif de traitement de données (DV) relié à l'unité émetteur-récepteur (SUE), dans lequel le dispositif de traitement de données (DV) est configurée pour
- spécifier à l'unité émetteur-récepteur (SUE) l'émission de signaux (US) à des intervalles de mesure (MI),
- identifier des zones de signaux (S1, S2) qui peuvent être associées à des objets (O1, O2), à l'aide de signaux reçus et réfléchis,
- identifier, pour des zones de signaux (S1, S2) apprenantes et reconnues, un écart des intensités (INT) des zones de signaux (S1, S2) reçues sur plusieurs intervalles de mesure (MI), et
- décider à l'aide de l'écart identifié, si une modification de l'objet, qui est associé à la zone de signaux (S1, S2) respectivement reconnues, a eu lieu,
**caractérisé en ce que**
l'écart est une variance (VAR) et le dispositif de traitement de données (DV) est en outre configuré pour évaluer au moyen d'un procédé d'intégration l'écart défini afin de déterminer une grandeur ou une surface de réflexion d'un objet (O1, O2).

2. Dispositif capteur (SE) selon la revendication 1,
où le dispositif de traitement de données (DV) est en outre configuré pour déterminer une direction de déplacement d'un objet (O1, O2) en mouvement, dans lequel des modifications de distance de l'objet (O1, O2) sont calculées à l'aide des zones de signaux (S1, S2) détectées sur plusieurs intervalles de mesure (MI).

3. Dispositif capteur (SE) selon l'une quelconque des revendications 1 à 2, où le dispositif de traitement de données (DV) présente un microcontrôleur.

4. Dispositif capteur (SE) selon l'une quelconque des revendications 1 à 3, lequel comprend un capteur à ultrasons.

5. Système informatique (CS), en particulier système de bureau ou à tour, avec un moyen de capteur (SE) selon l'une quelconque des revendications 1 à 4, présentant une unité formant écran (BE), au niveau de laquelle le moyen de capteur (SE) est fixé ou dans laquelle le moyen de capteur (SE) est intégré,
dans lequel le système informatique (CS) est configuré pour amener à l'aide des données calculées et/ou évaluées par le moyen de capteur (SE) l'unité formant écran (BE) et/ou le système informatique (CS) dans un état de fonctionnement prédéfini, en particulier dans un mode d'économie d'énergie.

6. Procédé de fonctionnement (BV) pour un moyen de capteur (SE), en particulier selon l'une quelconque des revendications 1 à 4, comprenant les étapes :
- d'émettre des signaux (US) en une multitude d'intervalles de mesure (MI),
- de recevoir des signaux réfléchis pendant la multitude d'intervalles de mesure (MI),
- détecter des zones de signaux (S1, S2) à l'aide des signaux reçus et réfléchis, qui peuvent être associées à des objets,
- identifier un écart des intensités (INT) de zones de signaux (S1, S2) apprenantes sur la multitude d'intervalles de mesure (MI), et
- décider à l'aide de l'écart identifié, si une modification de l'objet, qui est associé à la zone de signaux (S1, S2) respectivement détectée, a eu lieu,
**caractérisé en ce que**
l'écart est une variance (VAR) et
une autre étape suivante est exécutée :
déterminer la grandeur ou la surface de réflexion d'un objet (O1, O2) associé à une zone de signaux (S1, S2) détectée, dans lequel l'écart identifié est évalué au moyen d'un procédé d'intégration.

7. Procédé de fonctionnement (BV) selon la revendication 6, dans lequel est exécutée l'autre étape suivante :
déterminer des directions de déplacement d'objets (O1, O2) en mouvement, dans lequel des modifications de distance des objets (O1, O2) sont calculées à l'aide des zones de signaux (S1, S2) identifiées au moyen de la multitude d'intervalles de mesure (MI).

8. Procédé de fonctionnement (BV) selon l'une quelconque des revendications 6 ou 7,
dans lequel des signaux ultrasonores sont envoyés lors de l'étape d'émission.
